**Europäisches Patentamt**

**European Patent Office**

**Office européen des brevets**

(19)

(11) Veröffentlichungsnummer : **0 448 754 B1**

## (12) EUROPÄISCHE PATENTSCHRIFT

(45) Veröffentlichungstag der Patentschrift :
**03.11.93 Patentblatt 93/44**

(51) Int. Cl.$^5$ : **H04B 1/58**

(21) Anmeldenummer : **90105823.0**

(22) Anmeldetag : **27.03.90**

(54) **Zweidraht-Vierdraht-Umsetzer.**

(43) Veröffentlichungstag der Anmeldung :
**02.10.91 Patentblatt 91/40**

(45) Bekanntmachung des Hinweises auf die
Patenterteilung :
**03.11.93 Patentblatt 93/44**

(84) Benannte Vertragsstaaten :
**DE FR GB IT NL**

(56) Entgegenhaltungen :
**DE-A- 2 847 599**

(56) Entgegenhaltungen :
**US-A- 4 381 561**
**SIEMENS FORSCHUNGS- UND ENTWICK-
LUNGSBERICHTE, Band 5, Nr. 5, 1986, Seiten
253-258; D. VOGEL et al.: "A signal-processing codec filter for PCM applications"**

(73) Patentinhaber : **SIEMENS
AKTIENGESELLSCHAFT
Wittelsbacherplatz 2
D-80312 München (DE)**

(72) Erfinder : **Gazsi, Lajos, Dr.-Ing.
Fauna Strasse 23
D-4000 Düsseldorf (DE)**

EP 0 448 754 B1

Jouve, 18, rue Saint-Denis, 75001 PARIS

**Beschreibung**

Die Erfindung betrifft einen Zweidraht-Vierdraht-Umsetzer zur Kopplung eines analoge Sende- und Empfangssignale führenden Zweidraht-Übertragungswegs und eines Vierdraht-Übertragungswegs, der aus einem digitale Sendesignale führenden Zweidraht-Sendeweg und aus einem digitale Empfangssignale führenden Zweidraht-Empfangsweg besteht.

Bei Zweidraht-Vierdraht-Umsetzern besteht bekanntlich das Problem der Scheinwiderstandsanpassung zwischen den einzelnen Leitungen unterschiedlicher Übertragungswege. Eine Fehlanpassung verursacht beispielsweise schlechte Echodämpfungseigenschaften oder Reflexionen, aufgrund derer die Übertragungsqualität stark eingeschränkt ist. Besonders beim Übergang von einem Zweidraht-Übertragungsweg zu einem Vierdraht-Übertragungsweg ist eine relativ genaue Anpassung zwischen dem Scheinwiderstand des Zweidraht-Übertragungswegs und einem durch den Zweidraht-Vierdraht-Umsetzer gebildeten Abschluß-Scheinwiderstand erforderlich. Dabei werden die Zweidraht-Vierdraht-Umsetzer häufig auch als Schnittstelle zwischen analogen und digitalen Signalen ausgeführt.

Zur Anpassung der Scheinwiderstände von Zweidraht-Übertragungsweg und Zweidraht-Vierdraht-Umsetzer wurden ursprünglich auf analoger Seite passive Bauelemente zur Einstellung des erforderlichen Abschlußwiderstandes verwendet. Das bedeutet, daß zusätzliche Bauelemente, die meistens relativ große Abmessungen aufweisen, notwendig sind und daß eine Anpassung an unterschiedliche Leitungsscheinwiderstände mit zusätzlichem Aufwand verbunden ist.

Aus der DE-PS 31 41 502 ist beispielsweise ein Zweidraht-Vierdraht-Umsetzer bekannt, bei dem die Anpassung auf digitaler Seite mittels eines entsprechenden digitalen Filters erfolgt. Bei diesem bekannten Zweidraht-Vierdraht-Umsetzer werden auf einem Zweidraht-Übertragungsweg empfangene Signale einem Analog-Digital-Umsetzer zugeführt, dessen digitales Ausgangssignal auf einem Zweidraht-Empfangsweg weiter übertragen wird. Das Ausgangssignal des Analog-Digital-Umsetzers wird in einer digitalen Summierschaltung mit einem auf einem Zweidraht-Sendeweg anliegenden Signal addiert und einem digitalen Filter zugeführt. Die Filterkoeffizienten des digitalen Filters sind zur direkten Einstellung eines gewünschten Ausgangsscheinwiderstands veränderbar. Das digitale Ausgangssignal des digitalen Filters wird mittels eines Digital-Analog-Umsetzers in ein analoges Signal gewandelt, das seinerseits einem Spannungs-Strom-Umsetzer zugeführt wird. Der Ausgang des Spannungs-Strom-Umsetzers ist mit dem Zweidraht-Übertragungsweg verbunden.

Problematisch gestaltet sich bei dem bekannten Zweidraht-Vierdraht-Umsetzer die Realisierung des Spannungs-Strom-Umsetzers. Ausführungsformen mit geringem Aufwand sind häufig mit Stabilitätsproblemen behaftet, während stabilere Ausführungsformen einigen Mehraufwand erfordern.

Aufgabe der Erfindung ist es, einen Zweidraht-Vierdraht-Umsetzer anzugeben, der diese Nachteile nicht aufweist.

Diese Aufgabe wird durch einen Zweidraht-Vierdraht-Umsetzer gemäß Patentanspruch 1 gelöst. Ausgestaltungen und Weiterbildungen des Erfindungsgedankens sind Gegenstand von abhängigen Ansprüchen.

Die Erfindung wird nachfolgend anhand der in den Figuren der Zeichnung dargestellten Ausführungsbeispiele näher erläutert, wobei gleiche Elemente mit gleichen Bezugszeichen versehen sind. Es zeigt:

Figur 1        eine Ausführungsform eines erfindungsgemäßen Zweidraht-Vierdraht-Umsetzers,

Figur 2        ein Ersatzschaltbild eines erfindungsgemäßen Zweidraht-Vierdraht-Umsetzers bei Empfangsbetrieb,

Figur 3        ein Ersatzschaltbild eines erfindungsgemäßen Zweidraht-Vierdraht-Umsetzers bei Sendebetrieb und

Figur 4        ein Ersatzschaltbild eines erfindungsgemäßen Zweidraht-Vierdraht-Umsetzers bei Übertragung eines Gebührenzählimpulses.

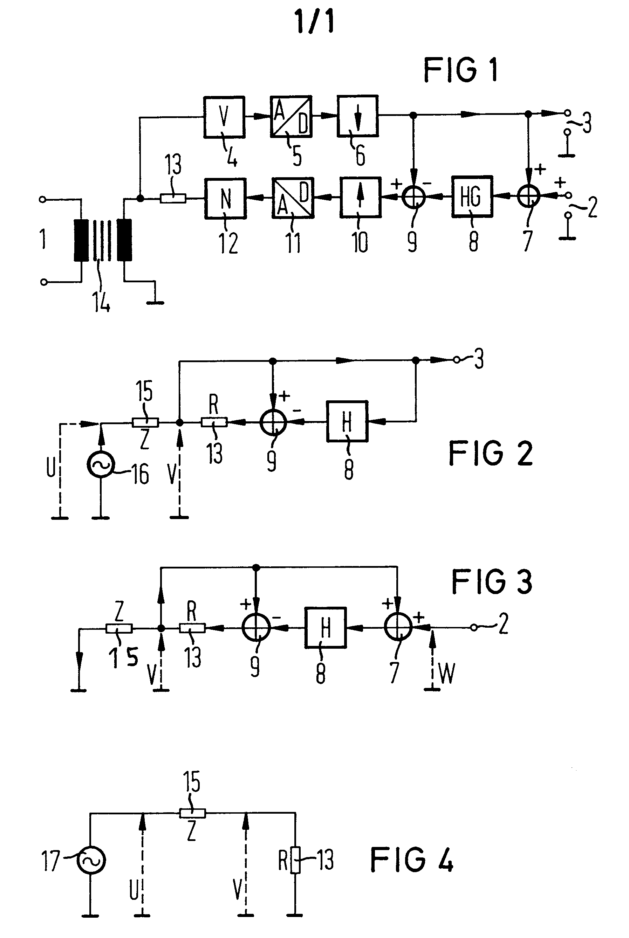

Nach Figur 1 der Zeichnung weist ein erfindungsgemäßer Zweidraht-Vierdraht-Umsetzer einen Analog-Digital-Umsetzer auf, der aus einem Vorfilter 4 mit Tiefpaß- oder Bandpaßverhalten und einem nachgeschalteten Codierer 5 besteht. Der Eingang des Vorfilters 4 ist über einen Übertrager 14 mit einem symmetrischen Zweidraht-Übertragungsweg 1 gekoppelt. An den Ausgang des Codierers 5 ist eine Abtastratenreduziereinrichtung 6 angeschlossen, welche die Abtastrate des mit Überabtastung arbeitenden Codierers 5 um einen gegebenen Faktor n herabsetzt. Die Abtastratenreduziereinrichtung 6 besteht dabei beispielsweise aus einem Tiefpaßfilter mit nachfolgender Schalteinrichtung, welche nur jeden n-ten Wert durchschaltet. An den Ausgang der Abtastratenreduziereinrichtung 6 ist ein Zweidraht-Empfangsweg 3 angeschlossen.

Weiterhin enthält ein erfindungsgemäßer Zweidraht-Vierdraht-Umsetzer einen Addierer 7, dessen einer Eingang mit dem Zweidraht-Empfangsweg 3 und dessen anderer Eingang mit einem Zweidraht-Sendeweg 2 verbunden ist. Dem Addierer 7 ist ein digitales Filter 8 nachgeschaltet, dessen Filterkoeffizienten und damit seine Übertragungsfunktion zur Erzeugung eines vorgegebenen Abschlußscheinwiderstandes für den Zweidraht-Übertragungsweg 1 einstellbar sind. Das Übertragungsverhalten des digitalen Filters 8 kann durch seine

2

Übertragungsfunktion HG ausgedrückt werden, die sich ihrerseits aus einer Teilübertragungsfunktion H und einer Teilübertragungsfunktion G zusammensetzt. Der Ausgang des digitalen Filters 8 ist auf einen Eingang eines Subtrahierers 9 geführt, dessen anderer Eingang mit dem Zweidraht-Empfangsweg 3 verbunden ist. Dabei wird von dem auf dem Zweidraht-Empfangsweg 3 auftretenden Signal das Ausgangssignal des digitalen Filters 8 subtrahiert.

Dem Subtrahierer 9 ist eine Abtastratenerhöhungseinrichtung 10 nachgeschaltet, welche die Abtastrate um einen gegebenen Faktor, in diesem Fall wiederum um den Faktor n, heraufsetzt. Die Abtastratenerhöhungseinrichtung 10 besteht aus einer Wiederholeinrichtung, welche einen Abtastwert n-mal nacheinander ausgibt, und aus einem nachfolgenden Tiefpaßfilter.

Der Abtastratenerhöhungseinrichtung 10 ist ein Digital-Analog-Umsetzer nachgeschaltet, der aus einem überabtastenden Decodierer 11 und einem Nachfilter 12 mit Tiefpaß- oder Bandpaßverhalten besteht. Der Ausgang des Nachfilters 12 ist mit dem Eingang des Vorfilters 4 über einen Widerstand 13 verbunden.

Zur Erläuterung der Funktionsweise eines erfindungsgemäßen Zweidraht-Vierdraht-Umsetzers werden im folgenden zwei grundsätzliche Betriebsarten unterschieden, nämlich ein Empfangsbetrieb, bei dem ein auf dem Zweidraht-Übertragungsweg auftretendes Signal zum Zweidraht-Empfangsweg 3 geführt wird, und einem Sendebetrieb, bei dem ein auf dem Zweidraht-Sendeweg 2 auftretendes Signal zum Zweidraht-Übertragungsweg 1 geführt wird. Für die weiteren Betrachtungen werden der Übertrager 14, das Vor- und Nachfilter 4, 12, der Codierer 5, der Decodierer 11, die Abtastratenerhöhungseinrichtung 10 und die Abtastratenreduziereinrichtung 6 als frequenzunabhängig und mit insgesamt einem Verstärkungsfaktor von 1 angenommen.

Daraus ergibt sich bei Empfangsbetrieb ein Ersatzschaltbild gemäß Figur 2. Eine Signalquelle 16, die hierbei als ideal angenommen wird, sendet ein Signal aus, das über den Zweidraht-Übertragungsweg 1 zum Zweidraht-Vierdraht-Umsetzer geführt wird. Das Übertragungsverhalten des Zweidraht-Übertragungswegs 1 sowie der Innenwiderstand einer nichtidealen Spannungsquelle und die Übertragungseigenschaften von Kopplungsgliedern, wie beispielsweise dem Übertrager 14, können durch einen Scheinwiderstand 15, der einen komplexen Scheinwiderstandswert Z aufweist, beschrieben werden. Beim Zweidraht-Vierdraht-Umsetzer wird nun das von der Signalquelle 16 ausgesendete Signal zum einem dem digitalen Filter 8 zugeführt und zum anderen auf den Subtrahierer 9 geleitet, der von diesem Signal das Ausgangssignal des digitalen Filters 8 abzieht. Das Ausgangssignal des Subtrahierers 9 wird nun über den Widerstand 13 in den Zweidraht-Übertragungsweg zurückgespeist. Bei optimaler Anpassung, d.h. bei maximaler Leistungsentnahme, ist die Spannung u der Signalquelle 16 doppelt so groß wie die Spannung v am Übergabepunkt zum Zweidraht-Vierdraht-Umsetzer. In Abhängigkeit von der Spannung u vom komplexen Wert Z des Scheinwiderstandes 15, vom Wert R des Widerstandes 13, von der komplexen Übertragungsfunktion GH des digitalen Filters 8, sowie von der Spannung v unter der Annahme einer Teilübertragungsfunktion G gleich eins folgender Zusammenhang:

$$u/v = (R + G H Z)/R = (R + H Z)/R.$$

Das Verhältnis u/v ist genau dann gleich 2, wenn

$$H = R/Z.$$

Für den Sendebetrieb ergibt sich ein Ersatzschaltbild gemäß Figur 3. Ein auf dem Zweidraht-Sendeweg 2 auftretendes Signal mit der Spannung w wird auf den einen Eingang des Addierers 7 geführt, an dessen Ausgang das digitale Filter 8 angeschlossen ist. Der Ausgang des digitalen Filters 8 ist wiederum mit dem einen Eingang des Subtrahierers 9 verschaltet. Das Ausgangssignal des Subtrahierers 9 wird zunächst über den Widerstand 13 und dann zum einen auf den durch den Scheinwiderstand 15 beschriebenen Zweidraht-Übertragungsweg 1 und zum anderen an die jeweils anderen Eingänge des Addierers 7 und des Subtrahierers 9 geführt. Bei optimaler Anpassung gilt für die Spannung v am Übergabepunkt von Zweidraht-Übertragungsweg 1 und Zweidraht-Vierdraht-Umsetzer

$$w/v = -2.$$

Das Verhältnis w/v errechnet sich zu

$$w/v = -(R + G H Z)/(G H Z) = -(R + HZ)/(H Z).$$

Auch hier folgt wiederum mit H = R/Z, daß v gleich -w/2 ist. Daraus ergibt sich nun, daß die Übertragungsfunktion H des digitalen Filters 8 gleich dem mit dem Wert des Widerstands 13 multiplizierte Kehrwert der Übertragungsfunktion des Zweidraht-Übertragungswegs 1 ist.

In diesem Zusammenhang sei darauf hingewiesen, daß als digitales Filter 8 in besonderem Maße Wellendigitalfilter geeignet sind, da diese unter allen Umständen die Stabilität auf digitaler Seite gewährleisten. Auch werden bevorzugt adaptive Filter eingesetzt, da diese eine größtmögliche Anpassung auch an unterschiedliche Scheinwiderstände schnell ermöglichen. Darüber hinaus finden überabtastende Codierer und Decodierer Verwendung, um zum einen den Filteraufwand auf analoger Seite gering zu halten und zum andern, um die Genauigkeit der Zweidraht-Vierdraht-Umsetzer zu erhöhen.

In der Fernsprechtechnik überträgt man nun in vielen Fällen Gebührenzählimpulse bis zum Fernsprechteilnehmer. Dann können mit Hilfe einer entsprechenden Einrichtung aus der Anzeige die jeweils aufgekommenen Gebühren ermittelt werden. Zum Übertragen dieser Zählimpulse zum Teilnehmer werden vornehmlich Wechselstromimpulse verwendet, deren Frequenz unterhalb oder oberhalb des Sprachbandes von 300 bis 3400 Hz liegt. Am häufigsten sind anzutreffen 16 kHz, 12 kHz und verschiedentlich noch 50 Hz.

Probleme entstehen bei den Zählimpulsen, deren Frequenz oberhalb des Sprachbandes liegt. Da Zählimpulse von der Amtseinrichtung zum Teilnehmer über unbespulte Kabel übertragen werden müssen und die über dem Hörbereich liegenden Frequenzen daher stark gedämpft werden, muß die Spannung der Signalquelle sehr hoch sein, um beim Teilnehmer vorhandene Gebührenanzeiger betreiben zu können. Weil die Spannung so zu bemessen ist, daß auch bei der maximal zulässigen Länge der Anschlußleitung die Gebührenanzeiger einwandfrei arbeiten können, liegt bei Fernsprechteilnehmern, die in unmittelbarer Nähe ihrer zugehörigen Vermittlungsstelle liegen, eine sehr hohe Spannung an. Dies kann dazu führen, daß die Zählimpulse (Frequenzen 12 oder 16 kHz) die Eingangsstufen der Analog-Digital-Umsetzer der Zweidraht-Vierdraht-Umsetzer, wie beispielsweise das Vorfilter, übersteuern und dabei die Datenübertragung erheblich stören, wenn die Zählimpulse während der bestehenden Verbindung übertragen werden. Daher sind üblicherweise in Datenübertragungseinrichtungen Sperren, beispielsweise in Form von Tiefpässen eingebaut, die Signale im Sprachband unbeeinflußt lassen und die Gebührenimpulse dämpfen. Zusätzliche analoge Filter stellen jedoch einen erheblichen Mehraufwand dar.

Für den Fall der Aussendung eines Gebührenzählimpulses ist im Prinzip das Ersatzschaltbild nach Figur 2 gültig. Allerdings weist das digitale Filter 8 nun eine Übertragungsfunktion HG auf, bei der die Teilübertragungsfunktion H gleich R/Z ist und die Teilübertragungsfunktion G nur im Sprachband gleich 1 ist. Dann gilt:

$$u/v = G + 1.$$

Wird nun die Teilübertragungsfunktion G so gewählt, daß ihr Wert bei einer gegebenen Frequenz, nämlich bei der Frequenz des Gebührenimpulses, größer als 1 und bei Frequenzen im Sprachband ungefähr gleich 1 ist, also Durchlaßverhalten bei der gegebenen Frequenz zeigt, so wird die Spannung der Gebührenzählimpulse auf 1/G+1 herabgesetzt. Bei entsprechender Dimensionierung wird eine Übersteuerung des Analog-Digital-Umsetzers bzw. des Vorfilters 4 vermieden.

Da bedingt durch Laufzeiten der Zweidraht-Vierdraht-Umsetzer eine gewisse Regelzeit benötigt, können in dieser Zeit die Gebührenzählimpulse dennoch den Analog-Digital-Umsetzer bzw. das Vorfilter 4 übersteuern. Der Wert des Widerstandes 13 wird nun so gewählt, daß er um einen gewissen Faktor kleiner ist als der Wert des Scheinwiderstandes 15. Der Innenwiderstand des Digital-Analog-Umsetzers bzw. des Nachfilters 12 ist in diesem Fall in etwa als Kurzschluß zu betrachten. Als Ersatzschaltbild ergibt sich dann gemäß Figur 4, daß an eine Signalquelle 17 für den Gebührenzählimpuls ein Spannungsteiler, bestehend aus dem Scheinwiderstand 15 und dem Widerstand 13, angeschlossen ist. Für die Spannung v gilt dann:

$$v = R/(R + Z) \, u.$$

Das Verhältnis von dem Wert des Widerstandes 13 und dem Wert des Scheinwiderstandes 15 wird demnach so gewählt, daß die Spannung v den Analog-Digital-Umsetzer bzw. das Vorfilter 4 nicht übersteuert.

**Patentansprüche**

1. Zweidraht-Vierdraht-Umsetzer zur Kopplung eines analoge Sende- und Empfangssignale führenden Zweidraht-Übertragungswegs (1) und eines Vierdraht-Übertragungswegs, der aus einem digitale Sendesignale führenden Zweidraht-Sendeweg (2) und aus einem digitale Empfangssignale führenden Zweidraht-Empfangsweg (3) besteht,
   - mit einem Analog-Digital-Umsetzer (4, 5), dessen Eingang mit dem Zweidraht-Übertragungsweg (1) und dessen Ausgang mit dem Zweidraht-Empfangsweg (3) gekoppelt ist,
   - mit einem Addierer (7), dessen einer Eingang mit dem Zweidraht-Empfangsweg (3) und dessen anderer Eingang mit dem Zweidraht-Sendeweg (2) verbunden ist,
   - mit einem digitalen Filter (8) mit einstellbarer Übertragungsfunktion (GH) zur Erzeugung eines vorgegebenen Abschlußscheinwiderstandes für den Zweidraht-Übertragungsweg (1), dessen Eingang mit dem Ausgang des Addierers (7) verbunden ist,
   - mit einem Subtrahierer (9), dessen einer Eingang mit dem Ausgang des digitalen Filters (8) verbunden ist und dessen anderer Eingang mit dem Ausgang des Analog-Digital-Umsetzers (4, 5) gekoppelt ist,
   - mit einem Digital-Analog-Umsetzer (11, 12), der mit dem Ausgang des Subtrahierers (9) gekoppelt ist, und
   - mit einem Widerstand (13), der zwischen den Ausgang des Digital-Analog-Umsetzers (11, 12) und den Eingang des Analog-Digital-Umsetzers (4, 5) geschaltet ist.

**2.** Zweidraht-Vierdraht-Umsetzer nach Anspruch 1,
**dadurch gekennzeichnet,**
daß die Übertragungsfunktion (GH) des digitalen Filters (8) eine erste Teilübertragungsfunktion (H) beinhaltet, die gleich mit dem Wert des Widerstands (13) multiplizierten Kehrwert der Übertragungsfunktion des Zweidraht-Übertragungswegs (1) ist.

**3.** Zweidraht-Vierdraht-Umsetzer nach einem der Ansprüche 1 bis 2,
**dadurch gekennzeichnet,**
daß die Übertragungsfunktion (GH) des digitalen Filters (8) eine zweite Teilübertragungsfunktion (G) beinhaltet, die bei einer gegebenen Frequenz Durchlaßverhalten zeigt.

**4.** Zweidraht-Vierdraht-Umsetzer nach einem der Ansprüche 1 bis 3,
**dadurch gekennzeichnet,**
daß bei einer gegebenen Frequenz ein durch den Zweidraht-Übertragungsweg (1) gebildeter Scheinwiderstand (15) einen um einen bestimmten Faktor größeren Wert aufweist als der Widerstand (13).

**5.** Zweidraht-Vierdraht-Umsetzer nach einem der Ansprüche 1 bis 4,
**dadurch gekennzeichnet,**
daß der Eingang des Analog-Digital-Umsetzers (4, 5) und der Ausgang des Digital-Analog-Umsetzers (11, 12) mittels eines Übertragers (14) mit dem Zweidraht-Übertragungsweg (I) gekoppelt sind.

**6.** Zweidraht-Vierdraht-Umsetzer nach einem der Ansprüche 1 bis 5,
**dadurch gekennzeichnet,**
daß der Analog-Digital-Umsetzer (4, 5) eine erhöhte Abtastrate aufweist und
daß dem Analog-Digital-Umsetzer (4, 5) eine Abtastratenreduziereinrichtung (6) nachgeschaltet ist.

**7.** Zweidraht-Vierdraht-Umsetzer nach einem der Ansprüche 1 bis 6,
**dadurch gekennzeichnet,**
daß der Digital-Analog-Umsetzer (11, 12) eine erhöhte Abtastrate aufweist und
daß dem Analog-Digital-Umsetzer (11, 12) eine Abtastratenerhöhungseinrichtung (10) vorgeschaltet ist.

**8.** Zweidraht-Vierdraht-Umsetzer nach einem der Ansprüche 1 bis 7,
**dadurch gekennzeichnet,**
daß als digitales Filter (8) ein Wellendigitalfilter vorgesehen ist.

**9.** Zweidraht-Vierdraht-Umsetzer nach einem der Ansprüche 1 bis 8,
**dadurch gekennzeichnet,**
daß als digitales Filter (8) ein adaptives digitales Filter vorgesehen ist.

**Claims**

**1.** Two-wire/four-wire converter for coupling a two-wire communications path (1) carrying analog transmission and reception signals and a four-wire communications path, which comprises a two-wire transmission path (2) carrying digital transmission signals and a two-wire reception path (3) carrying digital reception signals,
  - having an analog-to-digital converter (4, 5) whose input is coupled to the two-wire communications path (1) and whose output is coupled to the two-wire reception path (3)
  - having an adder (7) whose one input is connected to the two-wire reception path (3) and whose other input is connected to the two-wire transmission path (2),
  - having a digital filter (8) with an adjustable transfer function (GH) for generating a prescribed terminating impedance for the two-wire communications path (1), whose input is connected to the output of the adder (7),
  - having a subtractor (9) whose one input is connected to the output of the digital filter (8) and whose other input is coupled to the output of the analog-to-digital converter (4, 5),
  - having a digital-to-analog converter (11, 12) which is coupled to the output of the subtractor (9) and
  - having a resistor (13) which is connected between the output of the digital-to-analog converter (11, 12) and the input of the analog-to-digital converter (4, 5).

5

2. Two-wire/four-wire converter according to Claim 1, characterised in that the transfer function (GH) of the digital filter (8) contains a first partial transfer function (H) which is equal to the reciprocal, multiplied by the value of the resistor (13), of the transfer function of the two-wire communications path (1).

3. Two-wire/four-wire converter according to one of Claims 1 to 2, characterised in that the transfer function (GH) of the digital filter (8) contains a second partial transfer function (G), which exhibits conducting-state behaviour at a given frequency.

4. Two-wire/four-wire converter according to one of Claims 1 to 3, characterised in that at a given frequency an impedance (15) formed by the two-wire communications path (1) has a value larger by a specific factor than the resistor (13).

5. Two-wire/four-wire converter according to one of Claims 1 to 4, characterised in that the input of the analog-to-digital converter (4, 5) and the output of the digital-to-analog converter (11, 12) are coupled to the two-wire communications path (1) by means of a transformer (14).

6. Two-wire/four-wire converter according to one of Claims 1 to 5, characterised in that the analog-to-digital converter (4, 5) has a raised sampling rate, and in that a sampling rate reducing device (6) is connected downstream of the analog-to-digital converter (4, 5).

7. Two-wire/four-wire converter according to one of Claims 1 to 6, characterised in that the digital-to-analog converter (11, 12) has a raised sampling rate, and in that a sampling rate raising device (10) is connected upstream of the analog-to-digital converter (11, 12).

8. Two-wire/four-wire converter according to one of Claims 1 to 7, characterised in that a wave digital filter is provided as the digital filter (8).

9. Two-wire/four-wire converter according to one of Claims 1 to 8, characterised in that an adaptive digital filter is provided as the digital filter (8).

## Revendications

1. Convertisseur ou translateur deux fils-quatre fils pour le couplage d'une voie de transmission bifilaire (1) véhiculant des signaux d'émission et de réception analogiques et d'une voie de transmission quadrifilaire, qui est constituée par une voie d'émission bifilaire (2) véhiculant des signaux d'émission numériques et par une voie de réception bifilaire (3) qui véhicule des signaux de réception numériques, et comportant
   - un convertisseur analogique/numérique (4 ,5), dont l'entrée est accouplée à la voie de transmission bifilaire (1) et dont la sortie est accouplée à la voie de réception bifilaire (3),
   - un additionneur (7), dont une entrée est reliée à la voie de réception bifilaire (3) et dont l'autre entrée est raccordée à la voie d'émission bifilaire (2),
   - un filtre numérique (8) comportant une fonction de transfert réglable (GH) pour l'obtention d'une impédance de terminaison prédéterminée pour la voie de transmission bifilaire (1), dont l'entrée est raccordée à la sortie de l'additionneur (7),
   - un soustracteur (9), dont une entrée est reliée à une sortie du filtre numérique (8) et dont l'autre entrée est accouplée à la sortie du convertisseur analogique/ numérique (4,5),
   - un convertisseur numérique/analogique (11,12), qui est accouplé à la sortie du soustracteur (9), et
   - une résistance (13), qui est branchée entre la sortie du convertisseur numérique/analogique (11,12) et l'entrée du convertisseur analogique/numérique (4,5).

2. Convertisseur deux fils - quatre fils suivant la revendication 1, caractérisé par le fait que la fonction de transfert (GH) du filtre numérique (8) possède une première fonction de transfert partielle (H), qui est égale à l'inverse de la fonction de transfert de la voie de transmission bifilaire (1), multiplié par la valeur de la résistance (13).

3. Convertisseur deux fils - quatre fils suivant l'une des revendications 1 et 2, caractérisé par le fait que la fonction de transfert (GH) du filtre numérique (8) possède une seconde fonction de transfert partielle (G), qui, pour une fréquence donnée, présente le comportement passant.

4. Convertisseur deux fils - quatre fils suivant l'une des revendications 1 à 3, caractérisé par le fait que, pour une fréquence donnée, une impédance (15), formée par la voie de transmission bifilaire (1), possède une valeur, qui est supérieure d'un facteur déterminé à la résistance (13).

5. Convertisseur deux fils - quatre fils suivant l'une des revendications 1 à 4, caractérisé par le fait que l'entrée du convertisseur analogique/numérique (4,5) et la sortie du convertisseur numérique/analogique (11,12) sont accouplées à la voie de transmission bifilaire (1) au moyen d'un transformateur (14).

6. Convertisseur deux fils - quatre fils suivant l'une des revendications 1 à 5, caractérisé par le fait que le convertisseur analogique/numérique (4,5) possède une cadence d'échantillonnage accrue, et qu'un dispositif (6) de réduction de la cadence d'échantillonnage est branché en aval du convertisseur analogique/numérique (4,5).

7. Convertisseur deux fils - quatre fils suivant l'une des revendications 1 à 6, caractérisé par le fait que le convertisseur numérique/analogique (11,12) possède une cadence d'échantillonnage accrue, et qu'un dispositif (10) augmentant la cadence d'échantillonnage est branché en amont du convertisseur analogique/numérique (11,12).

8. Convertisseur deux fils - quatre fils suivant l'une des revendications 1 à 8, caractérisé par le fait qu'il est prévu comme filtre numérique (8) un filtre numérique d'ondes.

9. Convertisseur deux fils - quatre fils suivant l'une des revendications 1 à 8, caractérisé par le fait qu'il est prévu comme filtre numérique (8), un filtre numérique adaptatif.

7

1/1

FIG 1

FIG 2

FIG 3

FIG 4